# EUROPEAN PATENT SPECIFICATION

(11) **EP 0 495 026 B1**
(45) Date of publication and mention of the grant of the patent: **06.03.1996**
(21) Application number: 91911655.8
(22) Date of filing: 20.06.1991
(51) Int. Cl.: B29C 47/06, B32B 31/30, B32B 31/00

(54) **ABS/ACRYLIC LAMINATION PROCESS**
ABS/ACRYL-LAMINIERUNGSVERFAHREN
PROCEDE DE STRATIFICATION ABS/ACRYLIQUE

(30) Priority: 09.07.1990 US 549874
(43) Date of publication of application: 22.07.1992
(73) Proprietor: Aristech Chemical Corporation, Pittsburgh, PA 15230-0250 (US)
(72) Inventor: Hicks, Clark T., Ft. Thomas, KY 41075 (US); Hoffman, Ray D., Greensburg, PA 156011 (US); Thompson, James E., II, Pittsburgh, PA 15239 (US)
(74) Representative: Grünecker, Kinkeldey, Stockmair & Schwanhäusser Anwaltssozietät
(86) International application number: PCT/US91/04385
(87) International publication number: WO 92/00843

(56) References cited:
- EP-A- 0 308 200
- EP-A- 0 454 520
- US-A- 3 976 528
- US-A- 4 221 836
- US-A- 4 415 519
- US-A- 4 868 058

## Description

This invention relates to the manufacture of laminated formable materials of acrylonitrile-butadiene-styrene (ABS) and cross-linked polymethylmethacrylate ("XPMMA").

Polymethylmethacrylate (PMMA) sheets are in the following sometimes designated as "acrylic sheets".

Polymethylmethacrylate sheet is widely used in thermoforming applications such as for shower/tub enclosures, outdoor signs, and the like. Such thermoforming applications require the use of large molds frequently having deep drawn areas and/or corners which bring about variations in thickness, sometimes causing a weakening of the material in areas where strength is needed. The thermoformable sheet must be easily molded and retain a good measure of strength after molding.

The acrylic sheet commonly used has a high luster as well and can accommodate a wide variety, e.g. of pigments, fillers and dyes. It may also contain impact modifying particles, and/or may be cross-linked for toughness. Cross-linked materials typically are made by casting rather than extrusion.

Reinforcement, in the form of unsaturated polyester resins, applied usually with glass fibers to the back of the formed acrylic sheet, is frequently necessary to guard against mechanical failures of molded articles such as shower/tub enclosures and hot tubs. The application of the fiberglass reinforced polyester resin to the individual formed product is labor-intensive and generally undesirable because of its non-uniformity and the emission of styrene during application. The art, accordingly, is in need of a strong formable acrylic sheet having a built-in reinforcement.

A review of prior patents reveals that various acrylic coatings have been applied to polystyrene substrates by the use of solvents (U.S. Patent 2,801,936). In U.S. Patent 2,788,051, a layer of thermosetting polymer is extruded onto a substrate. Aqueous acrylic materials are coated onto various bases including acrylic sheets in U.S. Patents 4,066,820 and 4,202,924. Various laminated sheets and methods of making them, are disclosed in U.S. Patents 4,717,624, 4,699,579, and 4,419,412; U.S. Patents 4,100,325 and 4,221,836 include ABS as a component. Co-extrusion of ABS and polystyrene is shown in U.S. Patent 4,100,237, and co-extrusion of two different acrylic compositions is shown in U.S. Patent 3,846,368. Some of the prior art approaches to lamination involve an intermediate adhesive material.

See the complicated layering in U.S. Patent 3,356,560 which involves separated layers of PMMA and a material similar to it.

J. E. Johnson, in "Co-extrusion" Plastics Technology, February, 1976, states ABS and acrylics may see wide-ranging sheet applications, largely in outdoor furniture. He states they can be readily co-extruded, and doing so combines the toughness of ABS with the weatherability of acrylics.

One of the inventors herein is aware of the commercial use of a process in about 1970 wherein a thin polyacrylate film was applied to a substrate of a preformed ABS sheet, heated on only one side after which heat and pressure were applied in a roll stack.

The present process differs from the 1970 process in that the ABS is heated to a higher temperature and in fact is a pliant "web" emerging directly from an extruder where it is for example made from pellets. The ABS is not only at a higher temperature, but is heated throughout rather than only on one side, thus enabling it to respond more completely to the compression environment of the roll stack, with the advantages which will be explained infra. The PMMA used in the present process, being thicker than that of the 1970 process, serves as a base or substrate for the ABS. The ABS is in a more plastic state than the ABS of the prior art process, which was employed as the substrate for the acrylic film.

US-A-4868058 discloses multilayer polymeric co-extruded slabs and structural shapes obtained by simultaneous extrusion of different polymers in a single extrusion head, but without a separately added adhesive, wherein at least one of the different layers consists of a vinyl-aromatic polymer lamina containing up to 20% by weight of an ethylenically unsaturated nitrile. The polymers may be selected from the group consisting of aromatic polycarbonate, thermoplastic polyurethane, crystalline aromatic polyesters, styrene-butadiene-acrylonitrile terpolymer, styrene-acrylonitrile copolymer, resins of acrylic esters and anti-shock polystyrene.

US-A-4415519 discloses a method of making a unitary shaped laminate comprising at least one external layer of a polyvinylidene fluoride resin, a layer of a thermoplastic resin incompatible with polyvinylidene fluoride, and a layer of polyalkyl methacrylate resin intermediate and firmly adhered to said polyvinylidene fluoride and thermoplastic resin layers; said layers being blended at their interfaces only, comprising the steps of bringing molten streams of said resins into intimate contact with each other to form the laminate shape desired and then cooling said laminate. The thermoplastic resin may be ABS.

EP-A-454520, which is a prior art document according to Article 54(3) EPC, discloses a process for the production of a composite material comprising a cast polymethyl methacrylate panel combined with a support layer of a thermoplastic material, such as ABS. The adhesion of the two materials is obtained by applying the polymethyl methacrylate panel by calendering to the sheet of continuously formed thermoplastic material from its exit from the extruder when the thermoplastic material is still fluid, while the polymethyl methacrylate panel is at ambient temperature.

It is the object of the present invention to provide a method of making an ABS/cross-linked PMMA laminate, said laminate exhibiting excellent impact resistance properties as compared to polymethylmethacrylate (PMMA) alone, or XPMMA, while preserving the excellent appearance and thermoforming properties of PMMA as well as exhibiting excellent bonding of the two layers.

The present invention provides a method of making an ABS/cross-linked PMMA laminate comprising
(a) passing a lightly cross-linked PMMA sheet having a thickness of 0.25cm (0.1 inch) to 0.64cm (0.250 inch) into a roll stack (4);
(b) co-feeding into the roll stack (4) an ABS web 0.25 to 1.0 cm (0.1 to 0.4 inch) thick from an extruder (1) to achieve intimate contact between the ABS and the PMMA sheet; and
(c) cooling and compressing the co-fed sheets between rolls (9) under compression.

The present invention is a particular way of continuously manufacturing a dual-layer thermoformable sheet of ABS and cross-linked PMMA. In step (a) a lightly cross-linked PMMA sheet optionally passes through a heating zone where it is heated to a temperature up to 177°C (350°F), preferably 138 to 177°C (280°F to 350°F), especially 149-177°C (300-350°F). In step (b) the PMMA sheet is fed into a roll stack and an ABS web is co-fed into the roll stack from an extruder.

A "continuous" process means a process involving a PMMA sheet longer than e.g. 3.05 m (ten feet). The process of the present invention ideally involves the use of a PMMA sheet which is in the form of large rolls of 121.9 to 182.8 m (400 to 600 feet) even though the sheet may be as thick as 0.6 cm (0.250"). The process employs a PMMA sheet 0.25 cm (0.10") to 0.64 cm (0.250") thick and 91.4 cm (36") to 2.79 m (110") wide, in lengths of at least 121.9 m (400 feet). Such lengths may be made in the manner described in US Patents 3,371,383 and 3,376,371 to Hellsund and Opel et al, respectively. The sheet may be taken off the machine described and placed in large rolls for use in the process of the present invention. More particularly, the PMMA sheet will be made of cross-linked polymethylmethacrylate, having 0.1 % to 0.3 % by wt. of cross-linking monomers, selected from ethylene glycol dimethacrylate, polyethylene dimethacrylate, butane, hexane and/or higher dimethacrylate, i.e., any dimethacrylate having a linking group of up to ten carbon atoms, and in which 10 to 20% by wt. of the polymethylmethacrylate is not cross-linked.

We have found that the predominantly cross-linked PMMA described in the preceding paragraph is particularly good for the purposes of the present invention because it is tough and will provide a swell index of 10 to 15. The uncross-linked portion, comprising 19% to 20% of the sheet, helps to facilitate the penetration of the PMMA sheet by the styrene-acrylonitrile (SAN) of the ABS, since the SAN and the uncrosslinked PMMA are miscible.

The ABS may be any of the acrylonitrile-butadiene-styrene materials commonly found in commerce, used in a form which is conveniently extruded to the same width as the width of the PMMA as is recited in U. S. Patent 4,100,325 (col. 6, lines 48-68):
"Acrylonitrile-butadiene-styrene (ABS) polymers are suitable for use as the substrates of this invention. As is well known, ABS resins are polymeric materials made from acrylonitrile, butadiene, and styrene. Some ABS resins are made by polymerizing all three ingredients together. Others are made by block polymerization involving different ones or different mixtures of the three materials in different stages. Still others are made by polymerizing different pairs of these three materials and then blending the copolymers to produce a resin blend containing all three materials. ABS materials suitable for use as substrates in this invention contain from about 15% to about 35% acrylonitrile, from about 10% to about 35% butadiene, and from about 45% to about 65% styrene. Preferably, said materials contain from about 18% to about 24% acrylonitrile, from about 27% to 33% butadiene, and from about 46% to about 52% styrene.

The ABS substrates of this invention may contain other ingredients such as fillers, stabilizers, antioxidants, colorants, and others".

ABS generally comprises discrete rubber particles which may be made by grafting or copolymerizing a styrene-acrylonitrile copolymer onto a polybutadiene backbone, or by grafting or copolymerizing acrylonitrile onto or with butadiene, or simply butadiene. This rubbery material is dispersed in a continuous matrix of a styrene-acrylonitrile (SAN) copolymer, as is well known in the art. Useful compositions within the general category of ABS are commercially designated 841 and 1152 made by Monsanto. Most conveniently, the ABS is used in pellet form. Any commercially availavle ABS, may be used in the present invention which typically will have a SAN matrix comprising 65 to 90 % by weight of the ABS, and the balance a rubbery material dispersed therein.

An "ABS web" means a wide ribbon of heated ABS which is in a plastic state, normally in a range of temperatures of 232 to 289°C (450°F to 550°F), made in an extruder directly from pellets or other particulates. The web may droop somewhat in passing to the roll stack but will generally retain its to the roll stack but will generally retain its shape. It is essential that the ABS be at least 232°C (450°F)in order to asssure the interpenetration with the PMMA which is required for good lamination.

The laminated sheet obtained by the present invention will generally be designed so that the PMMA will be visible and on the normally used surface (as in a molded shower-tub enclosure, for example), and the ABS provides reinforcement and back-up. The cross-linked PMMA, typically made by casting on machines described in the aforementioned Hellsund and Opel patents generally has a "fine china" sheen, and is harder and more stain and chemical resistant than an extruded PMMA sheet. An extruded PMMA, which is generally not cross-linked, is not used in the present invention.

The drawing is a more or less diagrammatic side elevational view of a sheet/extrusion line preferred in the present invention.

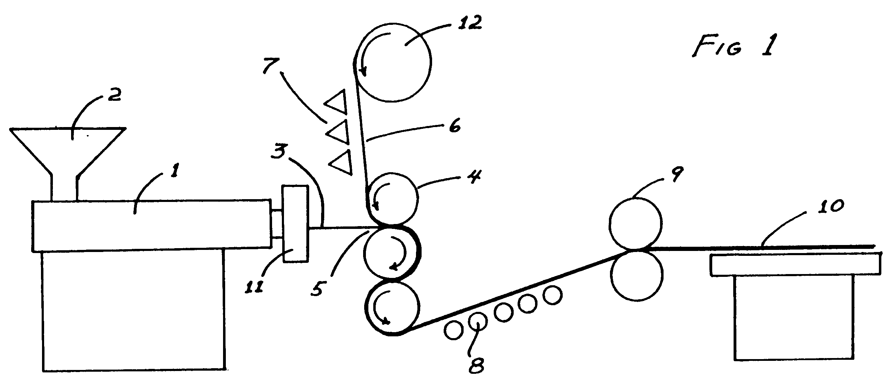

Our invention will be described in further detail with reference to Figure 1. Figure 1 is a more or less diagrammatic illustration of a sheet/extrusion line useful in the present invention. The extruder 1 receives ABS pellets in hopper 2, and feeds a web 3 of molten or plasticized ABS [typically 254°C (490°F)] which emerges from a die 11 to a stack 4 of metal rolls. Just prior to entry into the nip 5 of the roll stack 4, PMMA sheet 6 from feed roll 12, optionally preheated to about 149°C (300°F) by radiant heaters 7, is laid on the hot web 3 of ABS. Both the ABS web 3 and the preheated PMMA sheet 6 are typically about 2,57m (101 inches) wide at nip 5 and about 2,51m (99 inches) wide at shear point 10, due to thermal shrinkage.

The initial width may be up to about 3.30m (130 inches). The roll stack 4 should be provided with internal cooling means such as circulated water, and ideally will be controlled successively at 127°C, 104°C and 93°C (260°F, 220°F, and 200°F). This means that the first upstream roll of the roll stack (4) has a temperature of 127°C (260°F) and the last downstream roll of the roll stack (4) has a temperature of 93°C (200°F). At the exit of pull roll 9, the temperature should be about 66°C (150°F) on the acrylic surface; the ABS may still be about 104°C (220°F). In addition to cooling, the rolls preferably provide approximately 540 lb./lineal inch (500 to 580) of pressure to firmly bond the two materials. The combined sheet then cools further in air while supported on cooling/support rolls 8, is drawn through the pull rolls 9, and is optionally cut to size at shear point 10. It will be noted that the PMMA sheet 6 need be heated only from one side if at all, and that the initial ABS cooling is in direct contact with the roll 13. On roll 14, the ABS, which is initially considerably warmer than the PMMA, is cooled indirectly through the PMMA, which of course absorbs heat from the ABS.

Materials used in a particular demonstration of the invention were 3.81mm (150 mil), "I-300" (lightly cross-linked) PMMA (tradename), and Cycolac GSE ABS resin (tradename). The hygroscopic ABS pellets were first dried in a desiccant dryer to remove moisture. For these demonstrations, 40.6cm (16-inch) square specimens were cut from the acrylic roll, preheated in an oven to 149°C (300°F), and placed on 3.30mm (130 mils) of molten ABS. Clearance between cooling rolls was set at 6.86mm (270 mil), and a roll temperature of 100°C (212°F) was maintained on all three rolls.

Using the above procedure, several 7.11mm (280-mil) PMMA/ABS laminates were made. The materials bonded successfully without the use of an adhesive. Samples thermoformed at 182°C (360°F) maintained good adhesion.

The excellent bonding between lightly cross-linked PMMA and ABS is primarily due to the diffusion of styrene-acrylonitrile copolymers (SAN) in the ABS inch the PMMA layer (because 80-90% of the PMMA is cross-linked, only the acrylic extractables, about 10%-20%, can diffuse into the ABS). This diffusion is enhanced because ABS and PMMA are miscible if the acrylonitrile content of the SAN is between 10% and 33%. See e.g., M. E. Fowler, J. W. Barlow, and D. R. Paul "Kinetics of Adhesion Development at PMMA-SAN Interfaces", Polymer, Vol. 28, (1987), pp. 2145-2150.

The interfacial layer may be as thick as 50nm, depending on the amount of cross-linking and the time and temperature of conditions within the process of the present invention, based on an equation for average interpenetration depth given in Zhang and Wool, Macromolecules, Vol. 22 (NO.7), 1989, p. 3020, and assuming a diffusion coefficient for the polymer of 1 x 10⁻¹² cm²/sec. Total compression time is about 2.5 minutes, the turning of the rolls providing a laminate velocity of about 45.72cm (18 inches) per minute. Throughout the applied range of temperatures the effect of compression pressure and duration of compression can be seen. The strength of the bond is a function of the 0.25 power of contact time. If the desired combined thickness is, for example 8.89mm (0.35 inch), the first roll space should be about 8.64mm (0.340 inch).

Table I compares the results from Dynatup impact testing of the extrusion laminates to results on DR acrylic/ABS and Rovel/ABS co-extruded laminates, as well as monolithic samples of I-300 lightly cross-linked PMMA, and ABS. As noted, the first material listed for the laminates indicates the impacted side, and the failure energy reported is for that layer. The I-300/ABS composite yielded an impact resistance superior to monolithic I-300 PMMA (significant to the 95% confidence level). The DR/ABS and Rovel/ABS were an order of magnitude higher in impact energy. Lap-shear strength tests showed that the bonded area was stronger than either the ABS or PMMA.

Inspection of the impacted specimens reveals interesting differences in the mode of failure between the samples. The I-300 shattered typically like PMMA. Monolithic ABS, DR/ABS, and Rovel/ABS failed by the impactor driving straight through the thickness with damage confined to a hole of the circumference of the impactor.

The samples produced by the process of the present invention, however, had a completely different mode of failure. For these, a hole developed in the PMMA which again was about the same diameter of the impactor. The backup layer appears to prevent the rapid propagation of cracks normally prevalent in PMMA impact behavior. On the ABS side, a larger puncture (approximately twice the size of the top hole) is formed. The undamaged area of all laminate specimens remained tightly bonded. Therefore the process of the present invention eliminates the need for impact modifier additives because the ABS imparts its impact properties to the PMMA.

Compressive lap-shear properties of the laminate obtained according to the present invention were also tested. The bond strength apparently exceeded the inherent strength of the ABS since in all cases the ABS failed before the laminated surfaces.

The PMMA is in the form of a sheet and made by polymerizing a mixture of monomers comprising methylmethacrylate with up to 8% by weight other acrylate esters (such as butyl acrylate) and 0.1% by weight to 0.3% by weight cross-linking monomers which may include discrete particles of an "impact modifier" as is known in the art; however, such impact modifiers are not necessary. The PMMA sheet is 0.25cm (0.1 inch) to 0.64cm (0.25 inch), conveniently, from 0.25cm (0.1 inch) to 0.47cm (0.187 inch) thick, most preferably 0.27cm (0.108 inch) to 0.36cm (0.140 inch).

The ABS should be 0.25cm (0.1 inch) to 1.02cm (0.4 inch) thick.

The orientation of the roll stack, of course, need not be as shown in Figure 1 -- that is, the lamination process can take place horizontally or the sheets can be made to travel up rather than down.

**TABLE I**

| Dynatup Impact Results | | |
|---|---|---|
| Material* | Thickness, (inch)cm | Failure Energy, (ft.-lb.)** |
| I-300 | (0.362) 0.919 | 2.72 |
| ABS | (0.261) 0.663 | 70.7 |
| DR/ABS | (0.067/0.287) 0.170/0.729 | 36.6 |
| Rovel/ABS | (0.075/0.275) 0.191/0.699 | 23.8 |
| I-300/ABS | (0.150/0.130) 0.381/0.330 | 5.29 |

| | | |
|---|---|---|
| * The first material listed indicates the side which was impacted. | | |
| ** Failure energy for the impacted layer. | | |

## Claims

1. A method of making an ABS/cross-linked PMMA laminate comprising
(a) passing a lightly cross-linked PMMA sheet having a thickness of 0.25cm (0.1 inch) to 0.64cm (0.250 inch) into a roll stack (4);
(b) co-feeding into the roll stack (4) an ABS web 0.25 to 1.0 cm (0.1 to 0.4 inch) thick from an extruder (1) to achieve intimate contact between the ABS and the PMMA sheet; and
(c) cooling and compressing the co-fed sheets between rolls (9) under compression.

2. The method of claim 1, wherein an interfacial layer is formed between the ABS and PMMA said interfacial layer being partially due to migration of styrene-acrylonitrile polymer migrating into the PMMA sheet and partially due to migration of polymethylmethacrylate into the ABS.

3. The method of claim 1, wherein the PMMA sheet is heated on one side to 149-177°C (300-350°F) prior to passing into the roll stack (4).

4. The method of claim 1, wherein the lightly cross-linked PMMA sheet comprises polymethylmethacrylate having 0.1% to 0.3% by weight cross-linking monomers.

5. The method of claim 4, wherein the cross-linking monomer is a dimethacrylate.

6. The method of claim 1, in which 10% to 20% by weight of the polymethylmethacrylate is not cross-linked.

7. The method of claim 1, wherein the PMMA sheet has a swell index of 10 to 15.

8. The method of claim 1, wherein the first upstream roll of the roll stack (4) has a temperature of 127°C (260°F) and the last downstream roll of the roll stack (4) has a temperature of 93°C (200°F).

9. The method of claim 1, wherein the temperature of the ABS web is 232°C (450°F) to 289°C (550°F).

10. The method of claim 1, wherein the PMMA sheet is in the form of a continuous strip fed from a roll.

## Patentansprüche

1. Verfahren zur Herstellung eines ABS/vernetzten PMMA-Laminates umfassend
(a) Überführen eines schwach vernetzten PMMA-Bogens mit einer Dicke von 0,25cm (0,1 inch) bis 0,64cm (0,250 inch) in eine Stapelwalze (4);
(b) mit-Einführen einer 0,25 cm bis 1,0 cm (0,1 bis 0,4 inch) dicken ABS-Bahn aus dem Extruder (1) in die Stapelwalze (4) zur Erzielung eines innigen Kontaktes zwischen dem ABS und dem PMMA-Bogen; und
(c) Kühlen und Zusammenpressen der zusammengeführten Bögen zwischen den Walzen (9) unter Druck.

2. Verfahren gemäß Anspruch 1, wobei zwischen dem ABS und dem PMMA eine Grenzflächenschicht gebildet wird, wobei die Grenzflächenschicht teilweise die Folge einer Wanderung des Styrol-Acrylnitril-Polymeren in den PMMA-Bogen und teilweise Folge einer Wanderung des Polymethylmethacrylates in das ABS ist.

3. Verfahren gemäß Anspruch 1, wobei der PMMA-Bogen vor dem Überführen in die Stapelwalze (4) auf einer Seite auf 149-177 °C (300-350 °F) erhitzt wird.

4. Verfahren gemäß Anspruch 1, wobei der leicht vernetzte PMMA-Bogen Polymethylmethacrylat mit 0,1 bis 0,3 Gew.-% vernetzenden Monomer umfaßt.

5. Verfahren gemäß Anspruch 4, wobei das vernetzende Monomere ein Dimethacrylat ist.

6. Verfahren gemäß Anspruch 1, bei dem 10 bis 20 Gew.-% des Polymethylmethacrylates nicht vernetzt sind.

7. Verfahren gemäß Anspruch 1, wobei der PMMA-Bogen eine Schwellzahl von 10 bis 15 aufweist.

8. Verfahren gemäß Anspruch 1, wobei die erste vorgeschaltete Walze der Stapelwalze (4) eine Temperatur von 127 °C (260 °F) und die letzte nachgeschaltete Walze der Stapelwalze (4) eine Temperatur von 93 °C (200 °F) aufweist.

9. Verfahren gemäß Anspruch 1, wobei die Temperatur der ABS-Bahn 232 °C (450 °F) bis 289 °C (550 °F) aufweist.

10. Verfahren gemäß Anspruch 1, bei dem der PMMA-Bogen die Form eines von einer Rolle zugeführten Endlosbandes aufweist.

## Revendications

1. Procédé de fabrication d'un stratifié d'ABS/PMMA réticulé consistant
(a) à faire passer une feuille de PMMA légèrement réticulé présentant une épaisseur de 0,25 cm (0,1 pouce) à 0,64cm (0,250 pouce) dans un empilage de rouleaux (4);
(b) à cointroduire dans l'empilage de rouleaux (4) une bande d'ABS d'épaisseur 0,25 à 1,0 cm (0,1 à 0,4 pouce) provenant d'une extrudeuse (1) pour réaliser un contact intime entre l'ABS et la feuille de PMMA; et
(c) à refroidir et à comprimer les feuilles cointroduites entre des rouleaux (9) sous compression.

2. Procédé selon la revendication 1, dans lequel une couche interfaciale est formée entre l'ABS et le PMMA, ladite couche interfaciale étant partiellement due à la migration du polymère de styrène-acrylonitrile migrant dans la feuille de PMMA et partiellement due à la migration de polyméthacrylate de méthyle dans l'ABS.

3. Procédé selon la revendication 1, dans lequel la feuille de PMMA est chauffée sur un côté jusqu'à 149-177°C (300-350°F) avant de passer dans l'empilage de rouleaux (4).

4. Procédé selon la revendication 1, dans lequel la feuille de PMMA légèrement réticulé comprend du polyméthacrylate de méthyle présentant de 0,1% à 0,3% en poids de monomères de réticulation.

5. Procédé selon la revendication 4, dans lequel le monomère de réticulation est un diméthacrylate.

6. Procédé selon la revendication 1, dans lequel 10% à 20% en poids du polyméthacrylate de méthyle ne sont pas réticulés.

7. Procédé selon la revendication 1, dans lequel la feuille de PMMA présente un indice de gonflement de 10 à 15.

8. Procédé selon la revendication 1, dans lequel le premier rouleau en amont de l'empilage de rouleaux (4) présente une température de 127°C (260°F) et le dernier rouleau en aval de l'empilage de rouleaux (4) présente une température de 93°C (200°F).

9. Procédé selon la revendication 1, dans lequel la température de la bande d'ABS est de 232°C (450°F) à 289°C (550°F).

10. Procédé selon la revendication 1, dans lequel la feuille de PMMA est dans la forme d'une bande continue introduite à partir d'un rouleau.
